# EUROPEAN PATENT SPECIFICATION

(11) **EP 4 410 466 B1**
(45) Date of publication and mention of the grant of the patent: **08.07.2026**
(21) Application number: 24152516.1
(22) Date of filing: 18.01.2024
(51) Int. Cl.: B23K 9/09, B23K 9/095, B23K 9/18, B23K 25/00

(54) **SUBMERGED ARC WELDING METHOD AND SUBMERGED ARC WELDING MACHINE**
VERFAHREN ZUM UNTERPULVERSCHWEISSEN UND UNTERPULVERSCHWEISSMASCHINE
PROCÉDÉ DE SOUDAGE À L'ARC SUBMERGÉ ET MACHINE DE SOUDAGE À L'ARC SUBMERGÉ

(30) Priority: 25.01.2023 JP 2023009535
(43) Date of publication of application: 07.08.2024
(73) Proprietor: Daihen Corporation, Osaka-shi, Osaka 532-8512 (JP)
(72) Inventor: BABA, Hayato, OSAKA, 5328512 (JP); HONDA, Reo, OSAKA, 5328512 (JP); MIYAJIMA, Yuichi, OSAKA, 5328512 (JP); NARISADA, Yuki, OSAKA, 5328512 (JP)
(74) Representative: Cabinet Beaumont

(56) References cited:
- EP-A1- 0 139 249
- CN-A- 102 000 904
- JP-A- S56 144 871
- US-A1- 2018 281 094

## Description

The present invention relates to a submerged arc welding method and a submerged arc welding machine, see claims 1 and 3 respectively.

### [Background Art]

A technique is disclosed of adjusting the depth of penetration in AC submerged arc welding by regulating a ratio of the period during which positive voltage is applied to a welding wire and the period during which negative voltage is applied to the welding wire and by regulating effective current flowing during the respective periods (Non-Patent Document 1, for example). The periods to be regulated are positive and negative periods appearing in a single period of alternating current.

### [Prior Art Document]

US2018/281094 (describing the preamble of claims 1 and 3) relates to heat manipulation and seam tracking of weaved welds.

CN 102 000 904 relates to a device and method for improving hardness of a submerged arc surfacing layer.

### [Non-Patent Document]

[Non-Patent Document] Takafumi Miyata, Digital Controlled Submerged Arc Welding Power Source Equipped with Waveform Control Faculty, Journal of the Japan Welding Society, 2008, Vol. 77, issue 7, p. 635-639

### [Summary of Invention]

### [Problems to be Solved by Invention]

An object of the present invention is to provide a submerged arc welding method and a submerged arc welding machine that can achieve deeper penetration.

### [Means for Solving Problems]

The invention is defined by the appended set of claims.

### [Effect of Invention]

According to one aspect of the present invention, deeper penetration is obtained.

### [Brief Description of Drawings]

FIG. 1 is a schematic diagram illustrating one configuration of a submerged arc welding machine according to the present embodiment.
FIG. 2 is a flowchart showing a procedure of a submerged arc welding method according to the present embodiment.
FIG. 3A is a timing chart according to the present embodiment representing a state where a low current period and a high current period are periodically switched.
FIG. 3B is a timing chart according to the present embodiment representing a state where a low current period and a high current period are periodically switched.
FIG. 4 is a photograph of the backside of a base material welded by the submerged arc welding method according to the present embodiment.
FIG. 5 is a photograph of the backside of a base material welded by a conventional submerged arc welding method.

### [Mode for Carrying Out Invention]

Specific examples of a submerged arc welding method and a submerged arc welding machine according to an embodiment of the present disclosure will be described below with reference to the drawings. Note that the present invention is not limited to these examples. The scope of the present invention is defined by the appended claims, and all changes that fall within the meanings and the bounds of the claims, or equivalence of such meanings and bounds are intended to be embraced by the claims.

The present invention will be described below with reference to the drawings depicting embodiment thereof.

### <Submerged Arc Welding Machine>

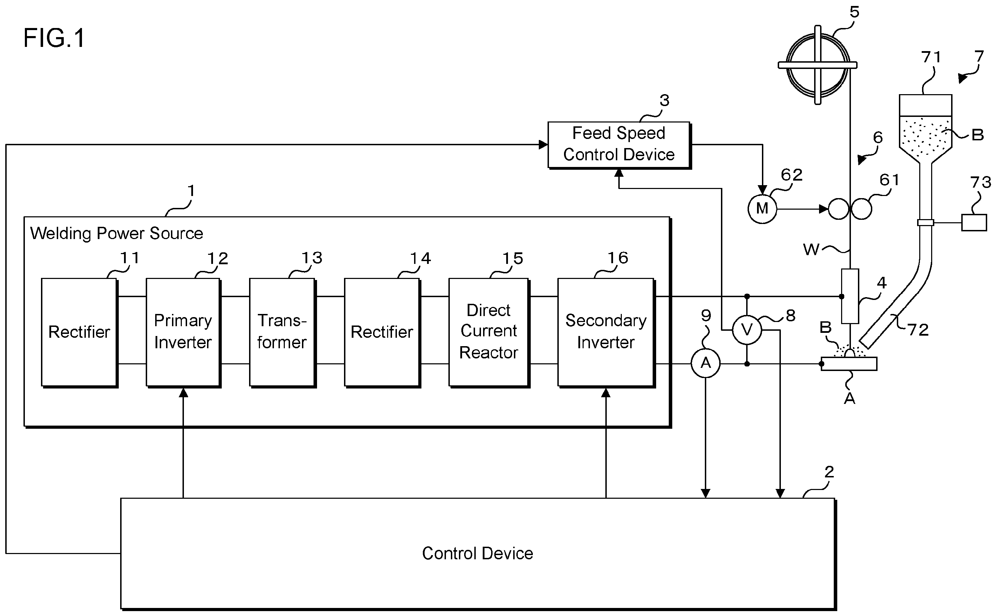

FIG. 1 is a schematic diagram illustrating one configuration of a submerged arc welding machine according to the present embodiment. The submerged arc welding machine according to the present embodiment includes a welding power source 1, a control device 2, a feed speed control device 3, a torch 4, a wire reel 5, a wire feed unit 6, a flux supply mechanism 7, a voltage sensor 8 and a current sensor 9.

The torch 4, which is made of a conducting material such as a copper alloy or the like, guides a welding wire W to a part to be welded of a base material A and has a cylindrical contact tip to supply welding current necessary for formation of an arc. The contact tip is in contact with the welding wire W inserted therethrough and supplies welding current to the welding wire W.

The wire feed unit 6 is provided with feed rollers 61 for drawing out the welding wire W wound around the wire reel 5 and feeding it to the torch 4, and a motor 62 for rotating the feed rollers 61. The wire feed unit 6 feeds the welding wire W to the torch 4 by rotating the feed rollers 61. The feed speed of the welding wire W is adjusted according to the welding voltage so that the arc length does not vary.

The feed speed of the welding wire W by the wire feed unit 6 is controlled by the feed speed control device 3. The arc length is proportional to the welding voltage (arc voltage). The welding voltage is voltage between the contact tip of the torch 4 and the base material A, and detected by the voltage sensor 8. A feed speed setting value as a target value is set to the feed speed control device 3 by the control device 2. The feed speed control device 3 controls the feed speed of the welding wire W so that the arc length is constant while regarding the difference between the feed speed setting value and the welding voltage detected by the voltage sensor 8 as an operating amount.

The voltage sensor 8 is a sensor for detecting voltage between an arc voltage detection lead attached to the torch 4 and an arc voltage detection lead attached to the base material A as welding voltage (arc voltage) and outputting a voltage value signal indicating the detected voltage value to the control device 2 and the feed speed control device 3.

The current sensor 9 is a sensor for detecting welding current that is supplied from the welding power source 1 to the welding wire W via the torch 4 and flows into the base material A through the arc and outputting a current value signal indicating the detected current value to the control device 2.

The flux supply mechanism 7 is equipped with a flux hopper 71, a nozzle 72 and a valve 73 and a flux recovery machine (not illustrated). The flux hopper 71 stores flux B injected from the top and supplies the flux B to a to-be welded part of the base material A through the nozzle 72 connected to the bottom thereof. The valve 73, which is for opening or closing a passage extending from the flux hopper 71 to the nozzle 72, adjusts the supply amount of the flux B. The operation and the degree of opening and closing of the valve 73 are controlled by the control device 2.

The welding power source 1 is an inverter-controlled AC welding power source with a constant-current characteristic and is provided with a rectifier 11, a primary inverter 12, a transformer 13, a rectifier 14, a direct current reactor 15 and a secondary inverter 16 that are connected in series in this order from the input side of a commercial power supply. The welding power source 1 is connected to the contact tip of the torch 4 and the base material A through a power cable. The welding power source 1 receives an input from the commercial power source and supplies welding power between the welding wire W and the base material A to generate an arc.

The rectifier 11 rectifies alternating current from the commercial power source and outputs the rectified current to the primary inverter 12. The primary inverter 12, which operates at a high frequency ranging from ten-odd to several tens of kHz, outputs high-frequency alternating current to a primary coil of the transformer 13. The transformer 13 transforms the alternating current which is then rectified at the rectifier 14 to be output to the second inverter 16 via the direct current reactor 15. The secondary inverter 16, which operates at a low frequency of several tens to several hundred of Hz, outputs low-frequency alternating current. The output of the alternating current causes application of AC welding voltage between the torch 4 and the base material A, which causes the welding current supplied from the welding power source 1 to flow from the torch 4 to the welding wire W through the power cable. With the heating of an arc generated between the base material A and the welding wire W by the welding current, welding of the base material A is performed. The arc is covered with flux B supplied by the flux supply mechanism 7.

The control device 2 is a circuit for outputting control signals to the primary inverter 12 and the secondary inverter 16 of the welding power source 1 and digitally controlling the respective inverters separately. The control device 2 is a processor including an arithmetic processing circuit such as a CPU, a multi-core CPU and the like, a storage device such as a ROM (Read only Memory), an EEPROM and a RAM (Random Access Memory) and input/output terminals. The input/output terminals are connected to the voltage sensor 8, the current sensor 9, the primary inverter 12, the secondary inverter 16, the feed speed control device 3, the valve 73 and an operation panel (not illustrated). The control device 2 performs PWM control on the primary inverter 12 to operate at constant current characteristic based on the set welding conditions and the detected welding current and welding voltage. Required welding voltage is applied between the base material A and the welding wire W to allow the welding current to flow.

### <Outline of Submerged Arc Welding Method According to Present Embodiment>

In the description below, the average values (the average value of the absolute values in the case where the output is alternating current) of the welding current and the welding voltage output from the welding power source 1 are referred to as output current and output voltage.

One of the typical welding processes with high efficiency for thick plates is submerged arc welding. In submerged arc welding, incomplete penetration often presents a problem, especially in single pass welding or in the first layer of multi-layer welding. Especially when penetration bead welding using a backing material is performed, incomplete welding is likely to occur, including lack of a penetration bead and lack of the fusion width of the backside bead.

In order to prevent incomplete penetration, deep penetration, which needs large output current and small output voltage, is effective. The lower the output voltage is, the shorter the arc length is, resulting in deeper penetration. The output current and the output voltage often have ranges specified by the construction guidelines, standards or the like and are not always freely adjustable. In addition, when the output current and the output voltage are manipulated, the wire feed speed changes, which involves management of the changes in the amount of weld metal. Especially when the output current is increased, the heat input in welding increases, resulting in impairment of the mechanical performance of the to-be welded part. For the forgoing reasons, a method for preventing incomplete penetration without changing the output current and output voltage is desired.

As a method for reducing incomplete welding, a technique of adjusting penetration depth in AC submerged arc welding has been developed by adjusting the ratio of the periods during which positive and negative voltages are applied to the welding wire W and the effective current during the respective periods as presented in the foregoing non-patent document 1.

The above-mentioned technique, however, can only be applied to AC welding, not to DC welding. In addition, the above-mentioned technique alone may not necessarily have sufficient effect on improvement in penetration and thus needs a further method for improving penetration.

### <Current Amplitude Control>

Hence, in the present embodiment, by periodically alternating the output current between the low current period and the high current period, the molten metal is pushed down with strong arc force during the high current period, and high heat input is applied to the deep part of the molten metal or the base material A to achieve deep penetration. Especially, in the case of performing penetration bead welding using a backing material, a significant penetration bead formation effect can be obtained. The ranges of conditions are indicated below.

The diameter of the welding wire W is 1. 2 mm or greater. The welding wire W with a diameter smaller than 1. 2 mm makes it difficult to stably maintain submerged arc welding. Since wires with a diameter of 1. 6 mm or greater are often used for the submerged arc welding application, a wire with a diameter of 1. 6 mm or greater is desirable. More preferably, the wire diameter of the welding wire W is between 2.4 mm and 6.4 mm inclusive that are well distributed in the market for the application of submerge arc welding.

The reference average welding current is equal to or more than 200A. This reference average welding current is the average value of the welding current over the entire period, including the low current periods and high current periods. This is the reference current for the output current in the low current periods and the output current for the high current periods.

The reference average welding current below 200A makes it difficult to stably maintain the submerged arc welding, even with the use of a welding wire W of a smaller diameter. According to the present invention, the reference average welding current of 350A or above is provided, since the penetration bead welding requires setting of the welding condition that can obtain deep penetration at a somewhat high current. More preferably, the reference average welding current is between 500A and 2000A inclusive, which is often applied as a welding condition in the submerged arc welding. The fluctuation range of the current relative to the reference average welding current, i.e., the difference between the output current (first average welding current) under the low current condition (first average welding condition) and the output current (second average welding current) under the high current condition (second welding condition) is equal to or more than 100A. If below 100A, the fluctuation range of the current is too small to obtain a noticeable effect. According to the present invention, the above-mentioned fluctuation range of the current is between 200A and 500A inclusive. A significant penetration bead formation effect can be obtained if the fluctuation range of the current is equal to or more than 200A while unstable welding is likely to occur if the fluctuation range of the current exceeds 500A.

The setting value of the wire feed speed may be made constant, or may be changed between the high current condition and the low current condition. Changing the setting value of the wire feed speed between the high current condition and the low current condition relatively causes unstable welding but has a greater penetration bead formation effect.

Note that the welding power source 1 performs AC constant current control in which the wire feed speed increases or decreases relative to the setting value due to the control for maintaining the arc length even if the setting value of the wire feed speed is constant.

The frequency at which current is varied is preferably equal to or higher than 1 Hz. If the frequency is lower than 1 Hz, the duration of the low current period and the high current period is too long to form a continuous deep penetration bead. Furthermore, longer duration of the high current period is more likely to destabilize welding. According to the present invention, the frequency is equal to or higher than 3 Hz and lower than 10 Hz. When the frequency is equal to or higher than 3 Hz, the duration of the high current period is short enough not to affect the stability of the welding.

The time ratio between the low current period and the high current period is, according to the present invention, in the range of 1:3 to 3:1 and more preferably 1:1. The welding current for each of the low current period and the high current period is determined by the reference average welding current, the above-mentioned fluctuation range of current and time ratio of the respective periods. Therefore, if there is a deviation in either side beyond the above-mentioned time ratio, deviation in current is also increased, which prevents stable welding. It should be noted that the output current in the high current period multiplied by the time period of the high current period may desirably be made equal to the output current in the low current period multiplied by the time period of the low current period.

The target to which the submerged arc welding method according to the present embodiment is applied is desirably single pass welding or the first layer of multi-layer welding. Note that since the deep penetration is less required in the second layer or later of the multi-layer welding, the present control does not produce a significant effect when applied, but it presents no problem if applied.

More preferably, the submerged arc welding method in the present embodiment may be applied to a pass where deep penetration bead welding is performed using a backing material such as flux B, copper plate, ceramic backing or the like.

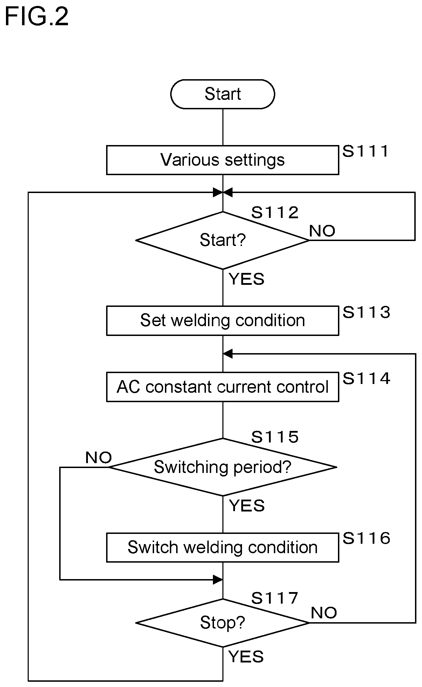

FIG. 2 is a flowchart showing a procedure of a submerged arc welding method according to the present embodiment. First, a pair of base materials A to be joined together by welding is placed on the submerged arc welding machine, and various settings are performed (step S111). After completion of the various settings, the control device 2 determines whether or not a condition for starting the output of the welding current is satisfied (step S112). Specifically, the control device 2 determines whether or not an output instruction signal for welding is input. If determining that the output instruction signal is not input and that the condition for starting the output of the welding current is not satisfied (step S112: NO), the control device 2 is placed in the wait state of waiting for the input of an output instruction signal.

If it is determined that the condition for starting the output of the welding current is satisfied (step S112: YES), the control device 2 sets the low current condition as an initial state, for example (step S113). Then, the control device 2 controls the feed speed and output of the welding wire W based on the set welding condition to perform welding control with AC constant current (step S114).

The feed speed of the welding wire W is controlled with reference to the set feed speed so that the welding voltage is constant, i.e., the arc length is constant. The control device 2 detects the welding voltage and welding current at the voltage sensor 8 and the current sensor 9, respectively and controls the outputs of the primary inverter 12 and the secondary inverter 16 so that the detected welding voltage and welding current satisfy the constant current characteristic of the welding power source 1 and match the set welding condition.

Next, the control device 2 determines whether or not the switching period has arrived (step S115). The switching frequency is lower than 10 Hz. The control device 2 determines whether or not the time corresponding to the period of the switching frequency has elapsed since the current welding condition was set. If it is determined that the switching period has arrived (step S115: YES), the control device 2 switches the welding condition (step S116). If the low current condition is set, the control device 2 sets the welding condition to the high current condition. If the high current condition is set, the control device 2 sets the welding condition to the low current condition.

If completing the processing at step S116, or if determining that the switching period has not yet arrived (step S115: NO), the control device 2 determines whether or not the output of the welding current is to be stopped (step S117). Specifically, the welding power source 1 determines whether or not the output instruction signal is continuously input. If determining that the output instruction signal is continuously input and the output of welding current is not stopped (step S117: NO), the control device 2 returns the processing to step S114 to continue to output the welding current.

If determining that the output of the welding current is stopped (step S117: YES), the control device 2 returns the processing to step S112.

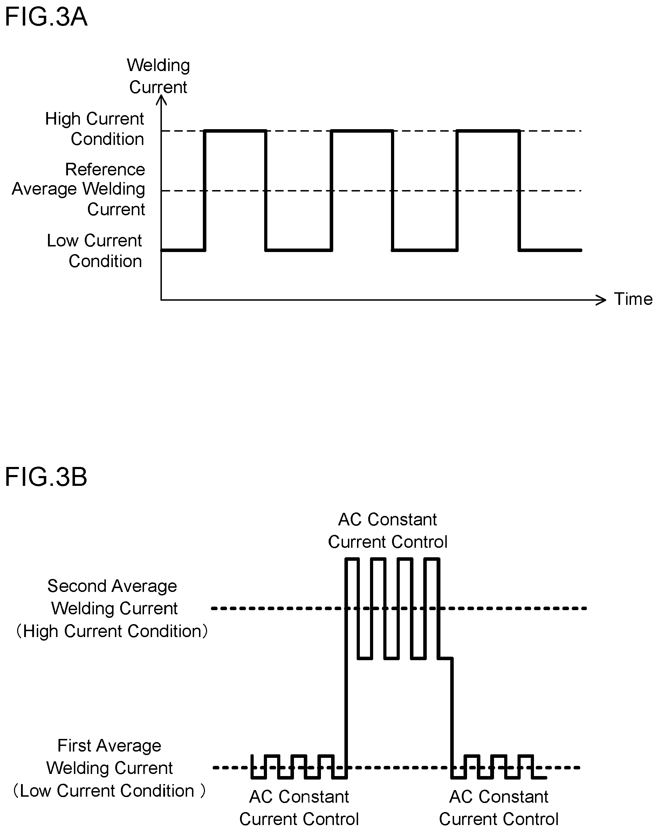

FIG. 3A and 3B is a timing chart representing a state where a low current period and a high current period according to the present embodiment are periodically switched. The horizontal axis represents the time while the vertical axis represents the welding current. By the processing at steps S115 and S116, the low current condition and the high current condition are periodically switched, to periodically change the output current, which is the average value of the welding current, as illustrated in FIG. 3A.

In addition, as illustrated in FIG. 3B, AC constant current control is performed in each of the low current period and the high current period to output AC welding current of a square wave relative to the average welding current for each of the low current period and the high current period. Though the example illustrated in FIG. 3B shows an example where the amplitude of the AC waveform is set to the magnitude of the first average welding current or the second average welding current, the method of setting the amplitude of the AC current is not limited to a particular method. Though, in the example illustrated in FIG. 3B, a square wave AC is represented as an example of an AC waveform, the type of AC waveform is not limited to a particular one.

### Example

An example of the submerged arc welding method according to the present embodiment is described.

In the present example, a low carbon steel base material A of 19 mm thick with a V groove of 70 degrees is prepared, and butt submerged arc welding is performed on the base material A. The root surface is 0 mm, the gap is 0 mm, and the backing material employs ceramic backing. The welding position is assumed to be vertically downward, and the welding speed is assumed to be 25 cm/min. The welding wire W employs a solid iron wire having a wire diameter of 1.6 mm, and the flux B employs a bonded flux. The wire extension is assumed to be 30 mm (route-to-chip distance). The reference average welding current is assumed to be 350A, and AC constant current welding is employed as the welding method. The AC waveform is a square wave with a frequency of 60 Hz, and the peak current is successively changed so that the average current for the respective periods match the set current. The wire feed speed is assumed to be constant feed speed of 6.5 m/min. Welding is performed in both cases where control according to the present embodiment is applied and not applied. In the case where control according to the present embodiment is applied, welding current is repeatedly varied at the frequency of 5 Hz assuming that the low current condition is 250A and the high current condition is 450A. The ratio between the respective periods is assumed as 1:1.

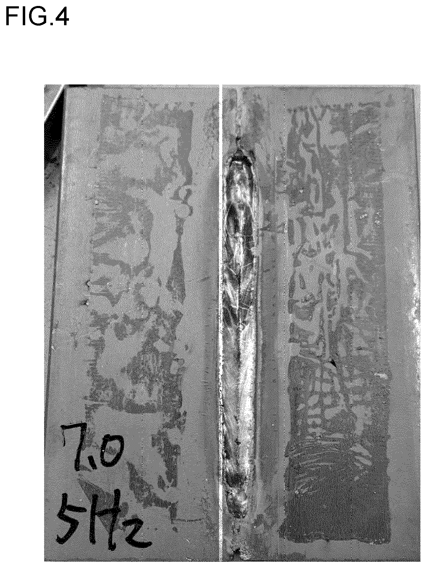

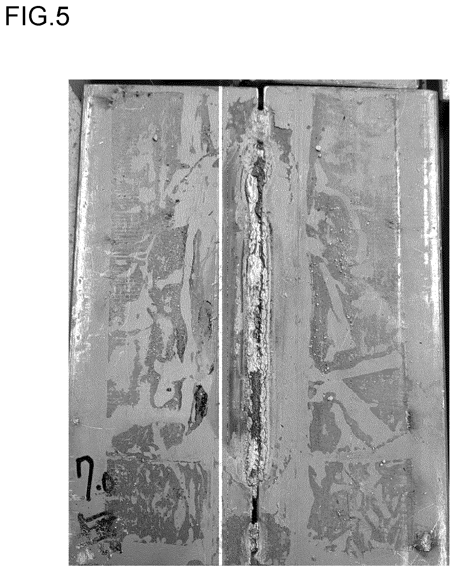

FIG. 4 is a photograph of the backside of a base material A welded by the submerged arc welding method according to the present embodiment while FIG. 5 is a photograph of the backside of a base material A welded by a conventional submerged arc welding method. When welding is performed under the above-mentioned conditions, a narrow and discontinuous deep penetration bead can be formed in the case where the control related to the present embodiment is not applied while a wide and stable deep penetration bead can be formed in the case where the control related to the present embodiment is applied, as illustrated in FIGs. 4 and 5.

The submerged arc welding method and the submerged arc welding machine according to the first embodiment can obtain deeper penetration than the control of adjusting the waveform in a single period of alternating current and can promote the formation of a deep penetration bead especially in the case where deep penetration welding is performed.

Although the submerged arc welding method using AC constant current control was described in the present embodiment, the submerged arc welding method according to the present embodiment may also be applied to a submerged arc welding method using DC constant voltage control, AC constant voltage control or DC constant current control.

Generally, the submerged arc welding includes AC welding and DC welding, and the control method includes constant current control and constant voltage control. Any combination may be applied without being limited to a specific method or characteristic. Here, in order to facilitate switching between on and off of the control and setting of various parameters, the digital-inverter-controlled welding power source 1 is preferable. Furthermore, in the case where the wire feed speed is changed between the high current period and the low current period, the wire feed speed is required to be switched with good response, so that the use of a digitally-controlled wire feed device is desirable.

Moreover, by setting the period at which the output current is periodically changed to below 10 Hz, the penetration bead formation effect as illustrated in FIG. 4 can be obtained while formation of discontinuous penetration bead is reduced.

By setting the reference average welding current to 350A, the average welding current under the low current condition to 250A, and the average welding current under the high current condition to 350A, deep penetration can be obtained owing to high current (350A or more) and a significant effect of penetration bead formation can be obtained owing to increase of the fluctuation range of the output current to 100A or more.

It is to be noted that, as used herein and in the appended claims, the singular forms "a", "an", and "the" include plural referents unless the context clearly dictates otherwise.

It is to be noted that the disclosed embodiment is illustrative and not restrictive in all aspects. The scope of the present invention is defined by the appended claims.

### [Description of Reference Numerals]

- 1: welding power source
- 2: control device
- 3: feed speed control device
- 4: torch
- 5: wire reel
- 6: wire feed unit
- 7: flux supply mechanism
- 8: voltage sensor
- 9: current sensor
- 11: rectifier
- 12: primary inverter
- 13: transformer
- 14: rectifier
- 15: direct current reactor
- 16: secondary inverter
- 61: feed roller
- 62: motor
- 71: flux hopper
- 72: nozzle
- 73: valve
- A: base material
- B: flux
- W: welding wire

## Claims

1. A submerged arc welding method comprising:
setting a first welding condition under which first average welding current is supplied to a welding wire (W) during a low current period;
setting a second welding condition under which second average welding current is supplied to a welding wire (W) during a high current period; and
the method being **characterised by** the following:
supplying welding current by AC constant current control of 10 Hz or higher, wherein:
- the first welding condition and the second welding condition are periodically switched at a frequency of 3 - 10 Hz;
- under the first welding condition and the second welding condition, reference average welding current for welding current is 350 - 2000A and a fluctuation range of average welding current is 200 - 500A; and
- a time ratio between the low current period and the high current period is in the range of 1:3 to 3:1.

2. The submerged arc welding method according to claim 1, wherein
under the first welding condition and the second welding condition, reference average welding current for welding current is 350A, first average welding current is 250A and second average welding current is 350A, and switching is performed at a frequency of 5 Hz.

3. A submerged arc welding machine, comprising:
a welding power source (1) comprising a primary inverter (12) and a secondary inverter (16),
a feed speed control device (3),
a torch (4),
a wire reel (5),
a wire feed unit (6),
a flux supply mechanism (7),
a control device (2),
a voltage sensor (8) for detecting voltage between an arc voltage detection lead attached to the torch (4) and an arc voltage detection lead attached to the base material (A) as welding voltage and outputting a voltage value signal indicating the detected voltage value to the control device (2) and the feed speed control device (3),
a current sensor (9) for detecting welding current that is supplied from the welding power source (1) to the welding wire (W) via the torch (4) and flows into the base material (A) through the arc and outputting a current value signal indicating the detected current value to the control device (2),
wherein the control device (2) is configured to output control signals to the primary inverter (12) and the secondary inverter (16), and to digitally control the respective inverters separately, the control device (2) including input/output terminals connected to the voltage sensor (8), the current sensor (9), the primary inverter (12), the secondary inverter (16), the feed speed control device (3), and an operation panel, the control device (2) being configured to perform PWM control on the primary inverter (12) to operate at constant current characteristic based on the set welding conditions and the detected welding current and welding voltage,
and **characterised in that**:
the control device being configured to: set a first welding condition under which first average welding current is supplied to the welding wire (W) during a low current period and a second welding condition under which second average welding current is supplied to the welding wire (W) during a high current period; and supply welding current by AC constant current control of 10 Hz or higher, periodically perform switching between the first welding condition and the second welding condition at a frequency of 3 - 10 Hz;
- setting under the first welding condition and the second welding condition, the reference average welding current for welding current in the range of 350 - 2000A and a fluctuation range of average welding current in the range of 200 - 500A; and
- setting a time ratio between the low current period and the high current period in the range of 1:3 to 3:1.

## Patentansprüche

1. Ein Unterpulverschweißverfahren, das Folgendes aufweist:
Einstellen einer ersten Schweißbedingung, unter der ein erster durchschnittlicher Schweißstrom dem Schweißdraht (W) während einer Niedrigstromperiode zugeführt wird;
Einstellen einer zweiten Schweißbedingung, unter der ein zweiter durchschnittlicher Schweißstrom dem Schweißdraht (W) während einer Hochstromperiode zugeführt wird; und
das Verfahren durch Folgendes gekennzeichnet ist:
Zuführen von Schweißstrom durch AC-Konstantstromregelung von 10 Hz oder höher, wobei:
- die erste Schweißbedingung und die zweite Schweißbedingung mit einer Frequenz von 3 - 10 Hz periodisch umgeschaltet werden;
- unter der ersten Schweißbedingung und der zweiten Schweißbedingung der durchschnittliche Referenzschweißstrom für den Schweißstrom 350 - 2000 A und ein Schwankungsbereich des durchschnittlichen Schweißstroms 200 - 500 A beträgt; und
- ein Zeitverhältnis zwischen der Niedrigstromperiode und der Hochstromperiode im Bereich von 1:3 bis 3:1 liegt.

2. Das Unterpulverschweißverfahren nach Anspruch 1, wobei
unter der ersten Schweißbedingung und der zweiten Schweißbedingung der durchschnittliche Referenzschweißstrom für den Schweißstrom 350 A beträgt, der erste durchschnittliche Schweißstrom 250 A und der zweite durchschnittliche Schweißstrom 350 A beträgt und das Umschalten mit einer Frequenz von 5 Hz durchgeführt wird.

3. Eine Unterpulverschweißmaschine, die Folgendes aufweist:
eine Schweißstromquelle (1), die einen Primärinverter (12) und einen Sekundärinverter (16) aufweist,
eine Vorschubgeschwindigkeits-Regeleinrichtung (3),
einen Brenner (4),
eine Drahtspule (5),
eine Drahtvorschubeinheit (6),
einen Flussmittelzufuhrmechanismus (7),
eine Steuereinrichtung (2),
einen Spannungssensor (8) zum Erfassen einer Spannung zwischen einem an dem Brenner (4) angebrachten Lichtbogenspannungserfassungsleiter und einem an dem Grundmaterial (A) angebrachten Lichtbogenspannungserfassungsleiter als Schweißspannung und zum Ausgeben eines Spannungswert-Signals, das den erfassten Spannungswert angibt, an die Steuereinrichtung (2) und die Vorschubgeschwindigkeits-Regeleinrichtung (3),
einen Stromsensor (9) zum Erfassen von Schweißstrom, der von der Schweißstromquelle (1) über den Brenner (4) dem Schweißdraht (W) zugeführt wird und durch den Lichtbogen in das Grundmaterial (A) fließt, und zum Ausgeben eines Stromwert-Signals, das den erfassten Stromwert angibt, an die Steuereinrichtung (2),
wobei die Steuereinrichtung (2) eingerichtet ist zum Ausgeben von Steuersignalen an den Primärinverter (12) und den Sekundärinverter (16) sowie zum digitalen und separaten Regeln der jeweiligen Inverter, wobei die Steuereinrichtung (2) Eingangs-/Ausgangsklemmen aufweist, die mit dem Spannungssensor (8), dem Stromsensor (9), dem Primärinverter (12), dem Sekundärinverter (16), der Vorschubgeschwindigkeits-Regeleinrichtung (3) und einem Bedienfeld verbunden sind, wobei die Steuereinrichtung (2) eingerichtet ist zum Durchführen einer PWM-Regelung des Primärinverters (12) zum Betrieb mit Konstantstrom-Charakteristik basierend auf den eingestellten Schweißbedingungen und dem erfassten Schweißstrom und der erfassten Schweißspannung,
und **dadurch gekennzeichnet, dass**:
die Steuereinrichtung eingerichtet ist zum: Einstellen einer ersten Schweißbedingung, unter der ein erster durchschnittlicher Schweißstrom dem Schweißdraht (W) während einer Niedrigstromperiode zugeführt wird, und einer zweiten Schweißbedingung, unter der ein zweiter durchschnittlicher Schweißstrom dem Schweißdraht (W) während einer Hochstromperiode zugeführt wird; und Zuführen von Schweißstrom durch AC-Konstantstromregelung von 10 Hz oder höhereines Umschaltens zwischen der ersten Schweißbedingung und der zweiten Schweißbedingung mit einer Frequenz von 3 - 10 Hz;
- Einstellen, unter der ersten Schweißbedingung und der zweiten Schweißbedingung, des durchschnittlichen Referenzschweißstroms für den Schweißstrom im Bereich von 350 - 2000 A und eines Schwankungsbereichs des durchschnittlichen Schweißstroms im Bereich von 200 - 500 A; und
- Einstellen eines Zeitverhältnisses zwischen der Niedrigstromperiode und der Hochstromperiode im Bereich von 1:3 bis 3:1.

## Revendications

1. Procédé de soudage à l'arc submergé comprenant :
la définition d'une première condition de soudage dans laquelle un premier courant de soudage moyen est fourni à un fil de soudage (W) pendant une période de faible courant ;
la définition d'une deuxième condition de soudage dans laquelle un deuxième courant de soudage moyen est appliqué à un fil de soudage (W) pendant une période de fort courant ; et
le procédé étant **caractérisé par** :
la fourniture du courant de soudage par une commande à courant constant alternatif AC de 10 Hz ou plus, dans lequel :
- la première condition de soudage et la deuxième condition de soudage sont alternées périodiquement à une fréquence comprise entre 3 et 10 Hz ;
- dans la première condition de soudage et dans la deuxième condition de soudage, le courant de soudage moyen de référence est compris entre 350 et 2 000 A et la plage de variation du courant de soudage moyen est comprise entre 200 et 500 A ; et
- un rapport temporel entre la période de faible courant et la période de fort courant est dans la plage allant de 1 pour 3 à 3 pour 1.

2. procédé de soudage à l'arc submergé selon la revendication 1, dans lequel
dans la première condition de soudage et dans la deuxième condition de soudage, le courant de soudage moyen de référence est de 350 A, le premier courant de soudage moyen est de 250 A et le deuxième courant de soudage moyen est de 350 A, et la commutation est effectuée à une fréquence de 5 Hz.

3. Machine à souder à l'arc submergé, comprenant :
une source d'alimentation en soudure (1) comprenant un premier onduleur (12) et un deuxième onduleur (16),
un dispositif de commande de la vitesse d'alimentation (3),
une torche (4),
une bobine de fil (5),
une unité d'alimentation en fil (6),
un mécanisme d'alimentation de flux (7),
un dispositif de commande (2),
un capteur de tension (8) destiné à détecter une tension entre une tête de détection de tension d'arc fixée à la torche (4) et une tête de détection de tension d'arc fixée au matériau de base (A) en tant que tension de soudure et à fournir en sortie un signal de valeur de tension qui indique la valeur de tension détectée au dispositif de commande (2) et au dispositif de commande de la vitesse d'alimentation (3),
un capteur de courant (9) destiné à détecter un courant de soudure qui est fourni par la source d'alimentation en soudure (1) au fil de soudure (W) par l'intermédiaire de la torche (4) et circule dans le matériau de base (A) au moyen de l'arc et à fournir en sortie un signal de valeur de courant qui indique la valeur de courant détectée au dispositif de commande (2),
dans lequel le dispositif de commande (2) est configuré pour fournir en sortie des signaux de commande au premier onduleur (12) et au deuxième onduleur (16), et pour commander numériquement les onduleurs respectifs séparément, le dispositif de commande (2) comportant des bornes d'entrée/sortie connectées au capteur de tension (8), au capteur de courant (9), au premier onduleur (12), au deuxième onduleur (16), au dispositif de commande de la vitesse d'alimentation (3) et à un panneau de commande, le dispositif de commande (2) étant configuré pour effectuer une commande PWM du premier onduleur (12) pour qu'il fonctionne à caractéristique de courant constant sur la base des conditions de soudure définies et des courant de soudure et tension de soudure détecté,
et **caractérisé en ce que** :
le dispositif de commande est configuré pour : définir une première condition de soudage dans laquelle un premier courant de soudage moyen est fourni au fil de soudage (W) pendant une période de faible courant et une deuxième condition de soudage dans laquelle un deuxième courant de soudage moyen est appliqué au fil de soudage (W) pendant une période de fort courant ; et fournir un courant de soudage par une commande à courant constant alternatif AC à 10 Hz ou plus, effectuer périodiquement une commutation entre la première condition de soudage et la deuxième condition de soudage à une fréquence comprise entre 3 et 10 Hz ;
- définir, dans la première condition de soudage et dans la deuxième condition de soudage, le courant de soudage moyen de référence dans la plage allant de 350 à 2 000 A et la plage de variation du courant de soudage moyen dans la plage allant de 200 à 500 A ; et
- définir un rapport temporel entre la période de faible courant et la période de fort courant dans la plage allant de 1 pour 3 à 3 pour 1.
